# EUROPÄISCHE PATENTSCHRIFT

(11) **EP 4 048 552 B1**
(45) Veröffentlichungstag und Bekanntmachung des Hinweises auf die Patenterteilung: **19.07.2023**
(21) Anmeldenummer: 20775349.2
(22) Anmeldetag: 25.09.2020
(51) Int. Cl.: B60Q 1/00, F21S 41/176, F21S 41/675, F21S 41/13, G01S 7/481, G01S 17/931

(54) **LICHTMODUL FÜR KRAFTFAHRZEUGE**
LIGHT MODULE FOR MOTOR VEHICLES
MODULE D'ÉCLAIRAGE POUR VÉHICULES AUTOMOBILES

(30) Priorität: 23.10.2019 EP 19204741
(43) Veröffentlichungstag der Anmeldung: 31.08.2022
(73) Patentinhaber: ZKW Group GmbH, 3250 Wieselburg (AT)
(72) Erfinder: BRANDSTETTER, Martin, 3370 Ybbs (AT); ALTMANN, Johann, 3950 Gmünd (AT); ARTMANN, Matthäus, 3370 Ybbs an der Donau (AT); HARTMANN, Peter, 3392 Schönbühel-Aggsbach (AT); WEISSENSTEINER, Stefan, 3961 Waldenstein (AT)
(74) Vertreter: Patentanwaltskanzlei Matschnig & Forsthuber OG
(86) Internationale Anmeldenummer: PCT/EP2020/076902
(87) Internationale Veröffentlichungsnummer: WO 2021/078469

(56) Entgegenhaltungen:
- EP-A1- 3 139 082
- EP-A1- 3 977 169
- WO-A1-2017/106892
- WO-A1-2018/176073
- WO-A2-2018/055449
- CN-U- 207 350 122
- DE-A1-102016 205 506
- DE-A1-102018 201 533

## Beschreibung

Die Erfindung bezieht sich auf ein Lichtmodul für Kraftfahrzeuge.

Der Einsatz von Laserlichtquellen in Kraftfahrzeugen gewinnt ständig an Bedeutung, da z.B. die Abmessungen von Laserdioden verglichen mit üblichen Leuchtdioden kleiner sind, was flexiblere und effizientere Einbaulösungen ermöglich, und auch die Leuchtdichte des Lichtbündels sowie die Lichtausbeute erheblich gesteigert werden kann. Bei den bekannten Lösungen wird kein direkter Laserstrahl emittiert, um eine Gefährdung der Augen von Menschen und anderen Lebewesen durch den extrem gebündelten Lichtstrahl hoher Leistung zu vermeiden. Der Laserstrahl wird vielmehr auf einen zwischengeschalteten Konverter, der ein Lumineszenzkonversionsmaterial, kurz "Phosphor" genannt, enthält, von z.B. blauem Licht in vorzugsweise "weißes" Licht umgewandelt.

Beispielsweise geht aus dem Dokument EP 2 954 256 B1 der Anmelderin ein Scheinwerfer als bekannt hervor, welcher mehrere modulierbare Laserlichtquellen aufweist, deren Laserstrahl über einen verschwenkbaren, von einer Spiegelansteuerung angesteuerten Mikrospiegel auf ein Lichtkonversionsmittel gelenkt wird, wobei das auf diesem erzeugte Leuchtbild mit einem Projektionssystem auf die Fahrbahn projiziert wird. Zum Modulieren der Strahlintensität der Laserlichtquellen ist eine Laseransteuerung vorgesehen und zwischen jeder Laserlichtquelle und dem Mikrospiegel ist eine Optik zur Formung je eines Laserstrahls mit vorgegebenem Strahlquerschnitt angeordnet. Der Mikrospiegel schwingt mit fester Frequenz um eine Achse, wobei die Strahlen der zumindest zwei Laserlichtquellen zur Bildung aneinander liegender Lichtbänder an dem Lichtkonversionsmittel über den Mikrospiegel umgelenkt sind. Der Abstand der Lichtbänder voneinander ist durch den gegenseitigen Winkel der geformten Laserstrahlen festgelegt und die Länge der Lichtbänder an dem Lichtkonversionsmittel durch die Schwingungsamplitude des Mikrospiegels. Dokument DE 10 2018 201533 A1 offenbart ein Lichtmodul für Kraftfahrzeuge mit einer ersten Laseranordnung, welche zumindest eine modulierbaren Laserlichtquelle (1; siehe auch Abs.12) enthält. Dokument CN 207 350 122 U offenbart ebenso ein Lichtmodul umfassend eine Laserlichtquelle.

Insbesondere für Assistenzsysteme in Kraftfahrzeugen, besonders für autonomen oder teilautonomen Betrieb ist LIDAR (Akronym für "light detection and ranging") eine günstige und verlässliche Methode zur optischen Vermessung der Umgebung bzw. zur Abstands- und Geschwindigkeitsmessung anderer Verkehrsteilnehmer. Naturgemäß ist ein großer überwachter Winkelbereich des Verkehrsraums vor dem Fahrzeug hier von besonderer Bedeutung. Zumindest ein Teilbereich des in Frage stehenden Überwachungsbereich wird auch von den Scheinwerfern des Fahrzeuges ausgeleuchtet, wobei sinngemäß auch einen Bereich hinter dem Fahrzeug messendes LIDAR und Heckscheinwerfer nicht außer Acht zu lassen sind.

Ein Problem heutiger Kraftfahrzeuge ist der oft nur geringe zur Verfügung stehende Bauraum für Beleuchtungssysteme einerseits und Sensorsysteme andererseits, wobei dieses Problem oft durch ästhetische Vorgaben von Designern vergrößert wird. Ein weiters Problem ist darin zu sehen, dass Scheinwerfer ebenso wie LIDAR-Systeme präzise eingebaut und justiert werden müssen, um die gewünschte Funktion sicher zu stellen.

Eine Aufgabe der Erfindung ist darin zu sehen, diese Probleme zu verringern bzw. zu beseitigen.

Diese Aufgabe wird mit einem Lichtmodul für Kraftfahrzeuge gemäß Anspruch 1 gelöst.

Dank der Erfindung erhält man ein Lichtmodul, welches bei kompakter Bauweise zwei Funktionen unabhängig voneinander ausführen kann, nämlich eine Beleuchtungsfunktion und eine Messfunktion.

Im Sinne einer Unabhängigkeit der beiden Funktionen des Lichtmoduls ist es von Vorteil, wenn der Einfallswinkel des Laserstrahls/der Laserstrahlen) der ersten Laseranordnung auf den Mikrospiegel unterschiedlich von dem Einfallswinkel des Laserstrahls/der Laserstrahlen der zweiten Laseranordnung ist. Dies gilt natürlich für je eine bestimmte Position des Mikrospiegels und führt naturgemäß auch zu unterschiedlichen Austrittswinkeln.

Es ist zweckmäßig, wenn die erste Laseranordnung zumindest zwei Laserlichtquellen umfasst, welchen eine Laseransteuerung zum Modulieren der Strahlintensität zugeordnet ist.

Es kann auch vorteilhaft sein, falls der ersten Laseranordnung und dem Mikrospiegel zumindest eine Optik zur Formung je eines Laserstrahls mit vorgegebenem Strahlquerschnitt angeordnet ist.

Um einen kompakteren Aufbau des Moduls zu erhalten, kann es empfehlenswert sein, wenn zwischen der ersten Laseranordnung und dem Mikrospiegel zumindest ein Umlenkspiegel angeordnet ist.

Falls zwischen der zweiten Laseranordnung und dem Mikrospiegel zumindest ein Umlenkspiegel angeordnet ist, führt dies gleichfalls zu einem kompakteren, raumsparenden Aufbau.

Bei Weiterbildungen der Erfindung ist vorgesehen, dass die erste Laseranordnung zumindest einen blauen/ ultravioletten Laser enthält und/oder dass die zweite Laseranordnung zumindest einen Infrarot-Laser enthält.

Um eine möglichst vollständige Reflexion sowohl für ultraviolette bzw. blaue Laserstrahlung als auch für infrarote Laserstrahlung zu erhalten, ist es empfehlenswert, wenn die reflektierende Beschichtung des Mikrospiegels aus der Gruppe der Metalle Gold, Aluminium, Silber ausgewählt ist.

Es hat sich als bewährt erwiesen, wenn der Mikrospiegel mit fester Frequenz um eine Achse schwingt, wobei die Strahlen der Laserlichtquellen der ersten Laseranordnung zur Bildung zumindest zweier aneinander liegender Lichtbänder an dem Lichtkonversionsmittel über den Mikrospiegel umgelenkt sind.

Der Abstand der Lichtbänder voneinander wird zweckmäßigerweise durch den gegenseitigen Winkel der geformten Strahlen der Laserlichtquellen der ersten Laseranordnung festgelegt und die Länge der Lichtbänder an dem Lichtkonversionsmittel ist durch die Schwingungsamplitude des Mikrospiegels und die Breite der Lichtbänder durch den Strahlquerschnitt bestimmt.

In Hinblick auf den kompakten Aufbau des Moduls ist es von besonderem Vorteil, wenn zum Justieren der Strahlengänge des Beleuchtungssystems und des LIDAR-Systems die Laserlichtquellen zumindest einer Laseranordnung und/oder die in den Strahlengängen befindlichen Spiegel einstellbar sind.

Erfindungsgemäß sind der Scanbereich des LIDAR-Systems und der Beleuchtungsbereich des Beleuchtungssystems zueinander winkelversetzt, sodass das LIDAR-System schräg zur Beleuchtung scannt. Dadurch können beispielsweise Objekte erfasst werden, die außerhalb, insbesondere seitlich von dem Ausleuchtungsbereich des Scheinwerfersystems liegen.

Es ist erfindungsgemäß vorgesehen, dass das LIDAR-System und das Beleuchtungssystem über die Beleuchtungsoptik bzw. die LIDAR-Austrittsoptik unterschiedliche Sichtfelder überstreichen bzw. ausleuchten. Erfindungsgemäß ist die LIDAR-Austrittsoptik so ausgelegt, dass das LIDAR-System einen Bereich des Verkehrsraums abscannt, welcher breiter ist als der Beleuchtungsbereich des Beleuchtungssystems.

Sinnvoll kann es weiters sein, wenn für die Optiken des LIDAR-Systems diffraktive optische Elemente eingesetzt sind, beispielsweise Beugungsgitter.

Ebenso können die Optiken im Laserpfad des Beleuchtungssystems als diffraktive optische Elemente ausgebildet sein.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 den prinzipiellen Aufbau eines Kraftfahrzeug-Scheinwerfers, der auf Basis eines Laserscanners arbeitet,
Fig. 2 das Prinzip eines scannenden LIDAR-Systems,
Fig. 3 den prinzipiellen Aufbau eines erfindungsgemäßen Lichtmoduls,
Fig. 4 eine beispielsweise Lichtverteilung eines Moduls nach der Erfindung,
Fig. 5a und b den von beiden Systemen überstrichenen Bereich in einer ersten nicht erfindungsgemäßen Variante und
Fig. 6a und b den von beiden Systemen überstrichenen Bereich in einer zweiten Variante nach der Erfindung.

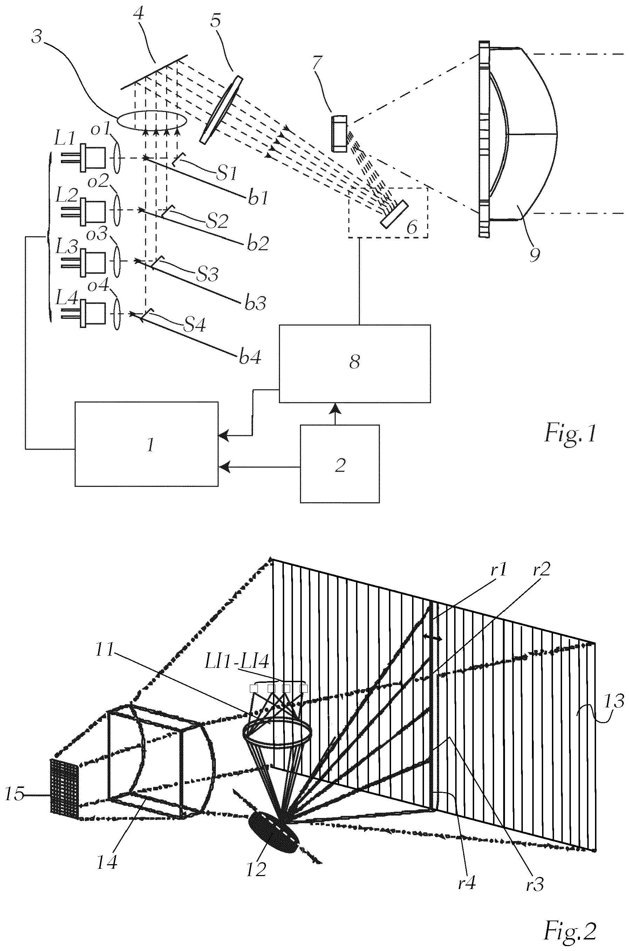

Fig.1 zeigt das Prinzip eines Laserscanner-Scheinwerfers, mit einer ersten Laseranordnung L_{S}, welche zumindest einen Laser, im vorliegenden Fall vier Halbleiterlaser L1, L2, L3, L4 aufweist, die je einen Laserstrahl abgeben, der mit b1, b2, b3, b4 bezeichnet ist. Den Lasern L1, L2, L3, L4 ist eine Laseransteuerung 1 zugeordnet, wobei diese Ansteuerung zur Stromversorgung dient und auch zum Modulieren der Strahlintensität der einzelnen Laser eingerichtet ist. Unter "Modulieren" wird in Zusammenhang mit der vorliegenden Erfindung verstanden, dass die Intensität einer Laserlichtquelle geändert werden kann, sei es kontinuierlich oder gepulst, im Sinne eines Ein- und Ausschaltens. Die Lichtleistung kann analog dynamisch geändert werden, je nachdem, an welcher Winkelposition ein später näher beschriebener Spiegel steht. Zusätzlich gibt es noch die Möglichkeit des Ein und Ausschaltens für eine gewisse Zeit, um definierte Stellen nicht zu beleuchten. Die Laseransteuerung 1 enthält ihrerseits wiederum Signale von einer zentralen Scheinwerferansteuerung 2, welcher Sensorsignale zugeführt werden können. Solche Steuer- und Sensorsignale können einerseits beispielsweise Schaltbefehle zum Umschalten von Fernlicht auf Abblendlicht sein oder andererseits Signale, die von Lichtsensoren aufgenommen werden, welche die Beleuchtungsverhältnisse auf der Fahrbahn erfassen.

Die Laserstrahlen b1, b2, b3, b4 sind über je einen Umlenkspiegel S1, S2, S3, S4 und über eine erste Optik 3 zu einem gemeinsamen Umlenkspiegel 4 gerichtet, welcher die vier Laserstrahlen über eine weitere Optik 5 über einen Mikrospiegel 6 auf ein beispielsweise als Leuchtfläche ausgebildetes Lichtkonversionsmittel 7 richtet, welche z.B. in bekannter Weise einen Phosphor zur Lichtkonversion aufweist. Den Lasern können Optiken **o1, o2, o4, o4** zur Strahlformung nachgeordnet sein, wie in der EP 2 954 256 B1 erläutert.

Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionsmittel kommen auch Optokeramiken in Frage, das sind transparente Keramiken, wie beispielsweise YAG-Ce (ein Yttrium-Aluminium-Granat mit Cer dotiert).

Der um lediglich eine einzige Achse schwingende Mikrospiegel 6 wird von einer Spiegelansteuerung 8 angesteuert und in Schwingungen konstanter Frequenz versetzt, wobei diese Schwingungen insbesondere der mechanischen Eigenfrequenz des Mikrospiegels entsprechen können. Auch die Spiegelansteuerung 8 wird ihrerseits von der Scheinwerferansteuerung 2 gesteuert, um die Schwingungsamplitude des Mikrospiegels 6 einstellen zu können, wobei auch asymmetrisches Schwingen um seine Achse einstellbar sein kann. Die Ansteuerung von Mikrospiegeln ist bekannt und kann auf vielerlei Art erfolgen, z.B. elektrostatisch oder elektrodynamisch. Bei erprobten Ausführungsformen der Erfindung schwingt der Mikrospiegel 6 beispielsweise mit einer Frequenz von einigen hundert Hz und sein maximaler Ausschlag beträgt in Abhängigkeit von seiner Ansteuerung einige wenige Grad bis 60°. Die Position des Mikrospiegels 6 wird zweckmäßigerweise an die Spiegelansteuerung 8 und/oder an die Scheinwerferansteuerung 2 rückgemeldet. Es sei angemerkt, dass für Mikrospiegel der hier in Frage kommenden Art oft das Akronym MEMS ("microelectromechanical system mirrors") verwendet wird.

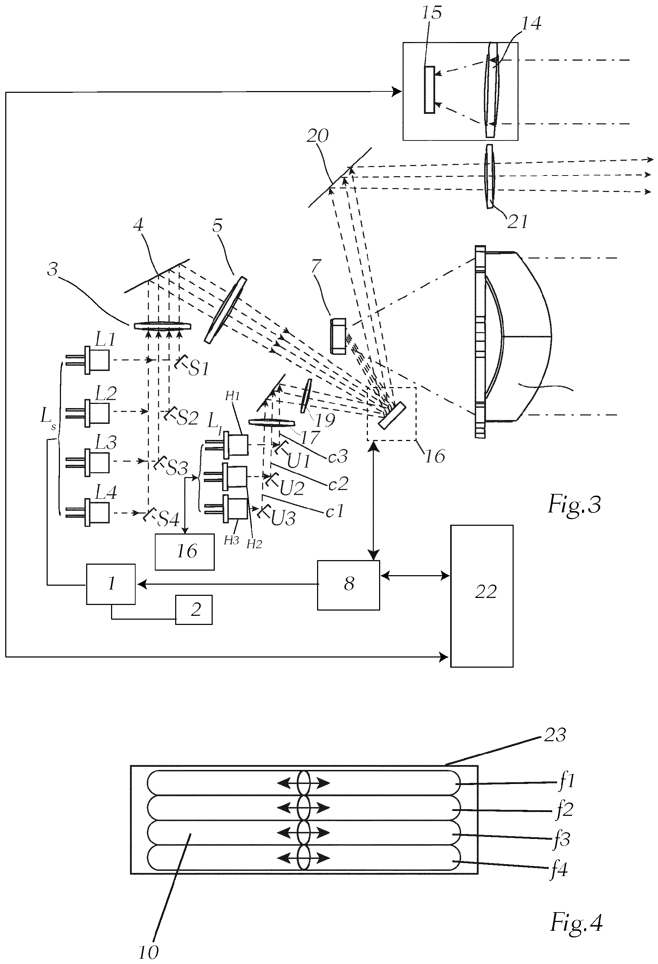

Die geformten Laserstrahlen b1, b2, b3, b4 erzeugen an dem Lichtkonversionsmittel 7, nämlich auf der Leuchtfläche des Lichtkonversionsmittels 7, die im Allgemeinen eben ist, jedoch nicht eben sein muss, horizontale Lichtbänder **f1, f2, f3, f4** (siehe Fig. 4), wobei der Winkel der Laserstrahlen b1, b2, b3, b4 bzw. der Halbleiterlaser L1, L2, L3, L4 bezüglich des Mikrospiegels 6 so eingestellt ist, dass die Lichtbänder auf der Leuchtfläche übereinanderliegen und aneinander angrenzen, wobei der Abstand der Lichtbänder voneinander bevorzugt Null ist. Dies kann durch entsprechendes Justieren der Halbleiterlaser L1, L2, L3, L4 genau eingestellt werden und auf der Leuchtfläche entsteht ein Leuchtbild, das aus den Lichtbändern, im vorliegenden Fall vier Lichtbändern f1, f2, f3, f4, zusammengesetzt ist. Dieses Leuchtbild wird nun mit einer Beleuchtungsoptik **9** als Leuchtbild **10** (Fig. 4) auf die Fahrbahn bzw. in den Außenraum projiziert. Die Verwendung von nur drei Lasern zur Bildung von drei auf die Fahrbahn projizierten Lichtbändern ist beispielsweise gleichfalls möglich, da diese Lichtbänder dann einem Fernlicht, der Hell-Dunkel-Grenze und einem Abblendlicht (Vorfeldlicht) entsprechen können. Im einfachsten Fall kann auch nur ein einziger Laser vorgesehen sein.

**Fig. 2** zeigt das Prinzip eines LIDAR-Systems, wie beispielsweise in dem Artikel "MEMS-based lidar for autonomous driving", H.W. Yoo et al., e&i 6.2018, p. 408ff beschrieben. Die gepulsten Strahlen mehrerer Laser **LI1, LI2, LI3, LI4** werden über eine Optik **11** zu einem Mikrospiegel **12** gesandt, welcher vier von den Lasern LI1, LI2, LI3, LI4 erzeugte vertikale Linien **r1, r2, r3, r4** horizontal scannend in den Außenraum führt und dabei ein gewisses Feld **13** überstreichen. Die Anzahl der Laser und damit der erzeugten vertikalen Linien kann eine andere als vier sein, nämlich mehr oder weniger als vier und im einfachsten Fall kann ein einziger Laser Verwendung finden. Laserimpulse, die von Objekten im Außenraum (Verkehrsraum) reflektiert werden, gelangen über eine fokussierende LIDAR-Eintrittsoptik **14** zu einem Detektor **15** und die dort erzeugten Signale werden nach entsprechender Verstärkung und Umwandlung ausgewertet, um Objekte hinsichtlich ihrer Position und/oder Geschwindigkeit, Größe etc. rasch erfassen zu können.

**Fig. 3** zeigt nun ein erfindungsgemäßes Lichtmodul für ein Kraftfahrzeug, wobei, soweit dies möglich ist, gleiche Bezugszeichen für Elemente verwendet werden, die bereits an Hand der Fig. 1 und Fig. 2 beschrieben wurden.

Der Aufbau des Abschnittes für den Laserscanner-Scheinwerfer entspricht genau dem in Fig. 1 dargestellten und wurde in Zusammenhang mit Fig. 1 bereits ausführlich beschrieben. Das Lichtmodul enthält nun zusätzlich zu den Scheinwerferkomponenten, nämlich den vier Halbleiterlasern L1, L2, L3, L4 mit der Laseransteuerung 1, der Scheinwerferansteuerung 2, den Spiegeln S1, S2, S3, S4, dem Umlenkspiegel 4, der Optik 5, dem Mikrospiegel 6, dem Lichtkonversionsmittel 7, der Spiegelansteuerung 8 und der Beleuchtungsoptik 9 eine zweite Laseranordnung L_{L}, welche zumindest einen Laser, im vorliegenden Fall drei Halbleiterlaser **H1, H2, H3** aufweist, die je einen Laserstrahl abgeben, der mit **c1, c2, c3** bezeichnet ist. Auch den Lasern H1, H2, H3 ist eine Laseransteuerung **16** zugeordnet. Die Laserstrahlen c1, c2, c3 gelangen ebenfalls auf den Mikrospiegel 6, und zwar im vorliegenden Fall unter optischer Zwischenschaltung dreier Umlenkspiegel **U1, U2, U3,** einer Optik **17,** eines den drei Strahlen gemeinsamen Umlenkspiegels **18** sowie einer weiteren Optik **19.** Von dem Mikrospiegel 6 werden die scannenden Strahlen des LIDAR-Systems über einen Umlenkspiegel **20** und eine LIDAR-Austrittsoptik **21** in den Verkehrsraum/Fahrbahn gesandt.

Die von Objekten im Außenraum (Verkehrsraum) reflektierten Lichtsignale gelangen über die LIDAR-Eintrittsoptik 14 zu dem Detektor 15 und die dort erzeugten Signale werden einer LIDAR-Steuerung/Auswertung **22** zugeführt und hier nach entsprechender Verstärkung und Umwandlung ausgewertet, um die erfassten Objekte hinsichtlich ihrer Position und/oder Geschwindigkeit, Größe etc. zu bestimmen. Die LIDAR-Steuerung/Auswertung 22 steht gleichfalls mit der Spiegelansteuerung 8 in Verbindung und, was hier nicht näher gezeigt ist, mit der Steuerung des zugehörigen Fahrzeuges.

Man erkennt in der Darstellung der Fig. 3 dass für beide Systeme, nämlich das Scheinwerfersystem und das LIDAR-System der Mikrospiegel gemeinsam verwendet wird, die Strahlengänge beider Systeme jedoch getrennt verlaufen, d.h. die Strahlen des LIDAR-Systems treffen nicht auf das Lichtkonversionsmittel 7 und die Strahlen des Scheinwerfersystems gelangen nicht zur LIDAR-Austrittsoptik.

Im Sinne einer Unabhängigkeit der beiden Funktionen des Lichtmoduls ist es von Vorteil, wenn der Einfallswinkel des Laserstrahls/der Laserstrahlen) der ersten Laseranordnung auf den Mikrospiegel unterschiedlich von dem Einfallswinkel des Laserstrahls/der Laserstrahlen der zweiten Laseranordnung ist. Dies gilt natürlich für je eine bestimmte Position des Mikrospiegels und führt naturgemäß auch zu unterschiedlichen Austrittswinkeln. Mit anderen Worten werden die IR-Strahlen des LIDAR-Systems unter einem anderen Winkel als die blauen oder ultravioletten Laserstrahlen des Beleuchtungssystems reflektiert und beide Strahlengruppen treten aus dem Modul aus, wobei jedenfalls für das LIDAR-System eine andere Austrittsoptik verwendet wird, als für die Beleuchtung. Die Laser werden entsprechend moduliert um anhand von Tof Methoden oder FMCW Methoden (Time of Flight (ToF), Frequency Modulated Continuous Wave lidar) mittels der von dem Detektor abgegebenen Signale den Abstand eines Objekts im Verkehrsraum zu bestimmen. Die Infrarot-Strahlen und die blauen Laserstrahlen werden immer von derselben Spiegelposition reflektiert, der Strahlengang ist aber geometrisch getrennt, weshalb das Modul gleichzeitig im LIDAR und im Beleuchtungs-Betrieb arbeiten kann.

Die gesamte Steuerung der Systeme, insbesondere auch die Spiegelansteuerung 8 ist so ausgebildet, dass beide Systeme unabhängig voneinander funktionieren und simultan oder abwechselnd arbeiten können. Um dies zu gewährleisten und in Hinblick auf den kompakten Aufbau des Moduls ist es von besonderem Vorteil, wenn zum Justieren der Strahlengänge des Beleuchtungssystems und des LIDAR-Systems die Laserlichtquellen zumindest einer Laseranordnung und/oder die in den Strahlengängen befindlichen Spiegel einstellbar sind.

Während die Halbleiterlaser L1, L2, L3, L4 vorzugsweise mit Wellenlängen im blauen oder UV-Bereich arbeiten sollen, um durch Umwandlung auf dem Phosphor weißes Licht zu erzeugen, arbeiten die Halbleiterlaser H1, H2, H3 des LIDAR-Systems vorzugsweise mit Wellenlängen im IR-Bereich, um für das menschliche Auge nicht sichtbare Strahlung zu erzeugen. Es ist natürlich darauf zu achten, dass im vorliegenden Fall ein Mikrospiegel 6 erforderlich ist, der hinreichend gute Reflexionseigenschaften für beide verwendete Lichtwellenlängen aufweist. In diesem Sinn eignen sich besonders Beschichtungen vorrangig aus Gold oder auch aus Aluminium oder Silber. Eine möglichst vollkommene Reflexion der auf den Mikrospiegel auftreffenden Laserstrahlung verringert das Problem einer zu starken Erwärmung des MEMS.

**Fig. 4** stellt schematisch eine beispielsweise Lichtverteilung des Lichtmoduls nach der Erfindung dar, wobei hier vier Lichtbänder f1, f2, f3, f4 mit "weißem" Licht, welche ihren Ausgangspunkt in der ersten Laseranordnung L_{S} haben, übereinander liegen und das Leuchtbild 10 bilden. Die Lichtbänder entstehen durch die Scanbewegung der von den Laserstrahlen herrührenden Leuchtflecke **m1, m2, m3, m4.** Der durch das LIDAR-System gescannte Bereich ist hier durch dessen Begrenzung **23** dargestellt.

Das LIDAR-System und das Beleuchtungssystem können ein unterschiedliche Sichtfeld überstreichen bzw. ausleuchten, was durch die getrennten Optiken, nämlich die Beleuchtungsoptik 9 und die LIDAR-Austrittsoptik 21 möglich ist. Unter dem Begriff "Sichtfeld" ist hier für das Beleuchtungssystem der ausgeleuchtete Bereich im Verkehrsraum zu verstehen, der je nach aktueller Beleuchtungssituation (z.B. Fernlicht - Abblendlicht -Taglicht) unterschiedlich groß sein kann, und für das LIDAR-System der durch die LIDAR-Lasersstrahlen abgescannte Bereich, in welchem Objekte erfasst werden können.

Dadurch können die Abbildungsbereiche von LIDAR und Beleuchtung unterschiedlich sein, obwohl für beide Systeme derselbe MEMS-Scanner, nämlich der Mikrospiegel 6, verwendet wird. Beispielsweise kann die LIDAR-Austrittsoptik 21 so ausgelegt sein, dass das LIDAR-System einen Bereich des Verkehrsraums abscannt, welcher breiter ist als der Beleuchtungsbereich des Beleuchtungssystems. Es ist auch möglich, den Scanbereich des LIDAR-Systems und den Beleuchtungsbereich des Beleuchtungssystems winkelversetzt auszulegen, sodass das LIDAR schräg zur Beleuchtung scannt.

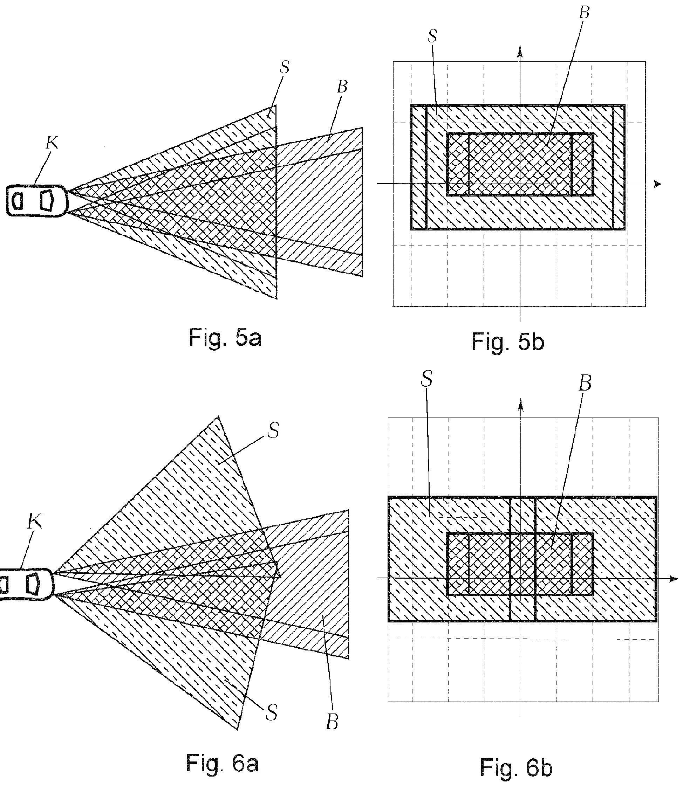

Zur Veranschaulichung ist in **Fig 5a** **und b** ein erstes Beispiel für einen Beleuchtungsbereich **B** des Beleuchtungssystems und einen Scanbereich S des LIDAR-Systems eines Kraftfahrzeuges **K** mit zwei Lichtmodulen gezeigt. Fig. 5a zeigt die Bereiche in einer Sicht von oben und Fig. 5b zeigt die Bereiche vom Fahrzeug aus nach vorne gesehen. Hier umfasst der Beleuchtungsbereich B einen kleineren Winkel als der Scanbereich S, beide Bereiche sind jedoch nach vorne gerichtet.

**Fig. 6a** **und b** zeigt in einer Darstellung sinngemäß wie Fig. 5a und b ein zweites Beispiel für einen Beleuchtungsbereich B und einen Scanbereich S eines Kraftfahrzeuges K mit zwei Lichtmodulen nach der Erfindung. Hier verläuft der Beleuchtungsbereich B, gleich wie bei Fig. 5a und b, unter einem bestimmten Winkel in Fahrtrichtung nach vorne, wogegen sich der Scanbereich S des LIDAR-Systems, sozusagen zweigeteilt, auch weit nach links außen und rechts außen erstreckt.

Man sieht, dass das LIDAR einen breiteren Bereich abdecken kann als die Beleuchtungsoptik, und auch zur Seite geschwenkt sein kann, wobei sich die Sichtbereiche des LIDARs eines linken und rechten Scheinwerfers gerade noch überlappen. Die Beleuchtungsoptik muss allerdings immer gerade nach vorne ausgerichtet sein.

Als Optiken 14, 17, 19, 21 für das LIDAR-Systemkönnen diffraktive optische Elemente verwendet werden, beispielsweise Beugungsgitter, da hier Laserstrahlung mit geringer spektraler Bandbreite, vorzugsweise monochromatisch, verwendet wird. Auch die Optiken o1 - o4, 3, 5 im blauen Laserpfad des Beleuchtungssystems können als diffraktive Elemente ausgebildet sein. Die Projektionsoptik im Strahlengang des "weißen" Lichtes nach dem Lichtkonversionsmittel 7 sollte allerdings zweckmäßigerweise eine Linsenoptik sein, da hier Farbfehler vermieden werden sollen.

### Liste der Bezugszeichen

| | | | |
|---|---|---|---|
| 1 | Laseransteuerung | H1 | Halbleiterlaser |
| 2 | Scheinwerferansteuerung | H2 | Halbleiterlaser |
| 3 | Optik | H3 | Halbleiterlaser |
| 4 | Umlenkspiegel | K | Kraftfahrzeug |
| 5 | Optik | L_{I} | zweite Laseranordnung |
| 6 | Mikrospiegel | L_{S} | erste Laseranordnung |
| 7 | Lichtkonversionsmittel | L1 | Halbleiterlaser |
| 8 | Spiegelansteuerung | L2 | Halbleiterlaser |
| 9 | Beleuchtungsoptik | L3 | Halbleiterlaser |
| 10 | Leuchtbild | L4 | Halbleiterlaser |
| 11 | Optik | LI1 | Laser |
| 12 | Mikrospiegel | LI2 | Laser |
| 13 | Feld | LI3 | Laser |
| 14 | LIDAR-Eintrittsoptik | LI4 | Laser |
| 15 | Detektor | m1 | Leuchtfleck |
| 16 | Laseransteuerung | m2 | Leuchtfleck |
| 17 | Optik | m3 | Leuchtfleck |
| 18 | Umlenkspiegel | m4 | Leuchtfleck |
| 19 | Optik | o1 | Optik |
| 20 | Umlenkspiegel | o2 | Optik |
| 21 | LIDAR-Austrittsoptik | o3 | Optik |
| 22 | LIDAR-Steuerung/ Auswertung | o4 | Optik |
| 23 | Begrenzung | r1 | vertikale Linie |
| | | r2 | vertikale Linie |
| B | Beleuchtungsbereich | r3 | vertikale Linie |
| b1 | Laserstrahl | r4 | vertikale Linie |
| b2 | Laserstrahl | S | Scanbereich |
| b3 | Laserstrahl | S1 | Umlenkspiegel |
| b4 | Laserstrahl | S2 | Umlenkspiegel |
| c1 | Laserstrahl | S3 | Umlenkspiegel |
| c2 | Laserstrahl | S4 | Umlenkspiegel |
| c3 | Laserstrahl | U1 | Umlenkspiegel |
| f1 | Lichtband | U2 | Umlenkspiegel |
| f2 | Lichtband | U3 | Umlenkspiegel |
| f3 | Lichtband | | |

## Patentansprüche

1. Lichtmodul für Kraftfahrzeuge
mit einer ersten Laseranordnung (Ls), welche zumindest eine modulierbare Laserlichtquelle (L1, L2, L3, L4) enthält, deren Laserstrahl/Laserstrahlen (b1, b2, b3, b4) auf einen verschwenkbaren, von einer Spiegelansteuerung (8) angesteuerten Mikrospiegel (6) und von diesem auf ein Lichtkonversionsmittel (7) gelenkt wird, und mit einer Beleuchtungsoptik (9) zur Projektion des an dem Lichtkonversionsmittel erzeugten Leuchtbildes (10) in den Verkehrsraum/Fahrbahn, als Beleuchtungssystem,
und mit einer zweiten Laseranordnung (V_{L}), welche zumindest eine Laserlichtquelle (H1, H2, H3) enthält, deren Laserstrahl/Laserstrahlen (c1, c2, c3) auf den verschwenkbaren, von der Spiegelansteuerung (8) angesteuerten Mikrospiegel (6) und von diesem über eine von der Beleuchtungsoptik (9) getrennte LIDAR-Austrittsoptik (21) in den Verkehrsraum/Fahrbahn gesandt wird, sowie mit einer LIDAR-Eintrittsoptik (14), welche im Außenraum reflektiertes Licht der zweiten Laseranordnung zu einem Detektor (15) sendet, als LIDAR-System, wobei der Einfallswinkel des Laserstrahls/der Laserstrahlen (b1, b2, b3, b4) der ersten Laseranordnung (Ls) auf den Mikrospiegel (6) unterschiedlich von dem Einfallswinkel des Laserstrahls/der Laserstrahlen (c1, c2, c3) der zweiten Laseranordnung (V_{L}) ist, wobei der Scanbereich des LIDAR-Systems und der Beleuchtungsbereich des Beleuchtungssystems zueinander winkelversetzt sind, sodass das LIDAR-System schräg zur Beleuchtung scannt, wobei das LIDAR-System und das Beleuchtungssystem über die Beleuchtungsoptik (9) bzw. die LIDAR-Austrittsoptik (21) unterschiedliche Sichtfelder überstreichen bzw. ausleuchten, wobei die LIDAR-Austrittsoptik (21) so ausgelegt ist, dass das LIDAR-System einen Bereich des Verkehrsraums abscannt, welcher breiter ist, als der Beleuchtungsbereich des Beleuchtungssystems.

2. Lichtmodul nach Anspruch 1, **dadurch gekennzeichnet, dass** die erste Laseranordnung (L_{S}) zumindest zwei Laserlichtquellen (1a, 1b, 1c, 1d) umfasst, welchen eine Laseransteuerung (1) zum Modulieren der Strahlintensität zugeordnet ist.

3. Lichtmodul nach Anspruch 1 oder 2, **dadurch gekennzeichnet, dass** zwischen der ersten Laseranordnung (L_{S}) und dem Mikrospiegel (6) zumindest eine Optik (o1, o2, o3, o4) zur Formung je eines Laserstrahls (b1, b2, b3, b4) mit vorgegebenem Strahlquerschnitt angeordnet ist.

4. Lichtmodul nach einem der Ansprüche 1 bis 3, **dadurch gekennzeichnet, dass** zwischen der ersten Laseranordnung (L_{S}) und dem Mikrospiegel (6) zumindest ein Umlenkspiegel (4, S1 - S4) angeordnet ist.

5. Lichtmodul nach einem der Ansprüche 1 bis 4, **dadurch gekennzeichnet, dass** zwischen der zweiten Laseranordnung (V_{L}) und dem Mikrospiegel (6) zumindest ein Umlenkspiegel (18, U1- U3) angeordnet ist.

6. Lichtmodul nach einem der Ansprüche 1 bis 5, **dadurch gekennzeichnet, dass** die erste Laseranordnung zumindest einen blauen/ultravioletten Laser enthält.

7. Lichtmodul nach einem der Ansprüche 1 bis 6, **dadurch gekennzeichnet, dass** die zweite Laseranordnung zumindest einen Infrarot-Laser enthält.

8. Lichtmodul nach einem der Ansprüche 1 bis 7, **dadurch gekennzeichnet, dass** die reflektierende Beschichtung des Mikrospiegels (6) aus der Gruppe der Metalle Gold, Aluminium, Silber ausgewählt ist.

9. Lichtmodul nach einem der Ansprüche 1 bis 8, **dadurch gekennzeichnet, dass** der Mikrospiegel (6) mit fester Frequenz um eine Achse schwingt, wobei die Strahlen der Laserlichtquellen der ersten Laseranordnung (Ls) zur Bildung zumindest zweier aneinander liegender Lichtbänder (f1, f2, f3, f4) an dem Lichtkonversionsmittel (7) über den Mikrospiegel umgelenkt sind.

10. Lichtmodul nach Anspruch 9, **dadurch gekennzeichnet, dass** der Abstand der Lichtbänder (f1, f2, f3, f4) voneinander durch den gegenseitigen Winkel der geformten Strahlen der Laserlichtquellen der ersten Laseranordnung (Ls) festgelegt, die Länge der Lichtbänder an dem Lichtkonversionsmittel (7) durch die Schwingungsamplitude des Mikrospiegels (6) und die Breite der Lichtbänder durch den Strahlquerschnitt bestimmt ist.

11. Lichtmodul nach einem der Ansprüche 1 bis 10, **dadurch gekennzeichnet, dass** zum Justieren der Strahlengänge des Beleuchtungssystems und des LIDAR-Systems die Laserlichtquellen (L1, L2, L3, L4; H1, H2, H3) zumindest einer Laseranordnung (L_{S}, V_{L}) und/oder die in den Strahlengängen befindlichen Spiegel (4, S1 - S4,18, U1 - U3) einstellbar sind.

12. Lichtmodul nach einem der Ansprüche 1 bis 11, **dadurch gekennzeichnet, dass** für die Optiken (14, 17, 19, 21) des LIDAR-Systems diffraktive optische Elemente eingesetzt sind, beispielsweise Beugungsgitter.

13. Lichtmodul nach einem der Ansprüche 1 bis 12, **dadurch gekennzeichnet, dass** die Optiken (o1 - o4, 3, 5) im Laserpfad des Beleuchtungssystems als diffraktive optische Elemente ausgebildet sind.

## Claims

1. Light module for motor vehicles
having a first laser arrangement (LS) which contains at least one modulatable laser light source (L1, L2, L3, L4) whose laser beam/laser beams (b1, b2, b3, b4) is/are directed onto a pivotable micro-mirror (6) which is driven by a mirror drive (8) and from the micro-mirror (6) onto a light conversion means (7), and with an illumination optical system (9) for projecting the illuminated image (10) generated at the light conversion means into the traffic area/roadway, as an illumination system,
and with a second laser arrangement (VL), which contains at least one laser light source (H1, H2, H3), the laser beam/laser beams (c1, c2, c3) of which are directed onto the pivotable mirror (6) controlled by the mirror control (8) and is sent by the latter via LIDAR exit optics (21), which are separate from the illumination optics (9), into the traffic area/roadway, and having LIDAR entry optics (14), which send light reflected in the external area from the second laser arrangement to a detector (15), as a LIDAR system, wherein the angle of incidence of the laser beam(s) (b1, b2, b3, b4) of the first laser arrangement (LS) on the micromirror (6) is different from the angle of incidence of the laser beam(s) (c1, c2, c3) of the second laser arrangement (VL), wherein the scanning range of the LIDAR system and the illumination range of the illumination system are angularly offset from each other so that the LIDAR system scans obliquely to the illumination, wherein the LIDAR system and the illumination system are arranged via the illumination optics (9) and the LIDAR exit optics (21) respectively, the LIDAR exit optics (21) being designed such that the LIDAR system scans an area of the traffic space which is wider than the illumination area of the lighting system.

2. Light module according to claim 1, **characterized in that** the first laser arrangement (LS) comprises at least two laser light sources (1a, 1b, 1c, 1d) which are associated with a laser drive (1) for modulating the beam intensity.

3. Light module according to claim 1 or 2, **characterized in that** at least one optical system (o1, o2, o3, o4) is arranged between the first laser arrangement (LS) and the micromirror (6) for shaping in each case one laser beam (b1, b2, b3, b4) with a predetermined beam cross section.

4. Light module according to one of claims 1 to 3, **characterized in that** at least one deflection mirror (4, S1 - S4) is arranged between the first laser arrangement (LS) and the micromirror (6).

5. Light module according to one of claims 1 to 4, **characterized in that** at least one deflection mirror (18, U1 - U3) is arranged between the second laser arrangement (VL) and the micromirror (6).

6. Light module according to one of claims 1 to 5, **characterized in that** the first laser arrangement contains at least one blue/ultraviolet laser.

7. Light module according to one of claims 1 to 6, **characterized in that** the second laser arrangement contains at least one infrared laser.

8. Light module according to one of the claims 1 to 7, **characterized in that** the reflective coating of the micromirror (6) is selected from the group of metals gold, aluminum, silver.

9. Light module according to any one of claims 1 to 8, **characterized in that** the micromirror (6) oscillates at a fixed frequency about an axis, the beams of the laser light sources of the first laser arrangement (LS) being deflected via the micromirror to form at least two light bands (f1, f2, f3, f4) adjacent to one another at the light conversion means (7).

10. Light module according to claim 9, **characterized in that** the distance of the light bands (f1, f2, f3, f4) from each other is determined by the mutual angle of the shaped beams of the laser light sources of the first laser arrangement (LS), the length of the light bands at the light conversion means (7) is determined by the oscillation amplitude of the micromirror (6) and the width of the light bands is determined by the beam cross-section.

11. Light module according to one of the claims 1 to 10, **characterized in that** for adjusting the beam paths of the illumination system and the LIDAR system, the laser light sources (L1, L2, L3, L4; H1, H2, H3) of at least one laser arrangement (LS, VL) and/or the mirrors (4, S1 - S4, 18, U1 - U3) located in the beam paths are adjustable.

12. Light module according to one of claims 1 to 11, **characterized in that** diffractive optical elements are used for the optics (14, 17, 19, 21) of the LIDAR system, for example diffraction gratings.

13. Light module according to one of claims 1 to 12, **characterized in that** the optics (o1 - o4, 3, 5) in the laser path of the illumination system are designed as diffractive optical elements.

## Revendications

1. Module d'éclairage pour véhicules automobiles
avec un premier dispositif laser (LS), qui contient au moins une source de lumière laser modulable (L1, L2, L3, L4), dont le rayon laser/les rayons laser (b1, b2, b3, b4) sont dirigés sur un miroir pivotant, micro-miroir (6) commandé par une commande de miroir (8) et est dirigé par celui-ci sur un moyen de conversion de lumière (7), et avec une optique d'éclairage (9) pour la projection de l'image lumineuse (10) générée sur le moyen de conversion de lumière dans l'espace de circulation/la chaussée, comme système d'éclairage,
et avec un deuxième dispositif laser (VL), qui contient au moins une source de lumière laser (H1, H2, H3), dont le rayon laser/les rayons laser (c1, c2, c3) sont dirigés sur le miroir pivotant, micro-miroir (6) commandé par la commande de miroir (8) et est envoyé par celui-ci dans l'espace de circulation/la chaussée via une optique de sortie LIDAR (21) séparée de l'optique d'éclairage (9), ainsi qu'avec une optique d'entrée LIDAR (14) qui envoie la lumière réfléchie dans l'espace extérieur du deuxième dispositif laser à un détecteur (15), en tant que système LIDAR, l'angle d'incidence du faisceau laser/des faisceaux laser (b1, b2, b3, b4) du premier dispositif laser (LS) sur le micromiroir (6) étant différent de l'angle d'incidence du faisceau laser/des faisceaux laser (c1, c2, c3) du deuxième dispositif laser (VL), la zone de balayage du système LIDAR et la zone d'éclairage du système d'éclairage étant décalées angulairement l'une par rapport à l'autre, de sorte que le système LIDAR effectue un balayage oblique par rapport à l'éclairage, avec l'optique de sortie LIDAR (21) balayent ou éclairent des champs de vision différents, l'optique de sortie LIDAR (21) étant conçue de manière à ce que le système LIDAR balaye une zone de l'espace de circulation qui est plus large que la zone d'éclairage du système d'éclairage.

2. Module d'éclairage selon la revendication 1, **caractérisé en ce que** le premier agencement de laser (LS) comprend au moins deux sources de lumière laser (1a, 1b, 1c, 1d) auxquelles est associée une commande de laser (1) pour moduler l'intensité du faisceau.

3. Module d'éclairage selon la revendication 1 ou 2, **caractérisé en ce qu'**au moins une optique (o1, o2, o3, o4) est disposée entre le premier dispositif laser (LS) et le micromiroir (6) pour former respectivement un faisceau laser (b1, b2, b3, b4) avec une section transversale de faisceau prédéfinie.

4. Module d'éclairage selon l'une des revendications 1 à 3, **caractérisé en ce qu'**au moins un miroir de déviation (4, S1 à S4) est disposé entre le premier agencement laser (LS) et le micromiroir (6).

5. Module d'éclairage selon l'une des revendications 1 à 4, **caractérisé en ce qu'**au moins un miroir de renvoi (18, U1 - U3) est disposé entre le deuxième ensemble laser (VL) et le micromiroir (6).

6. Module d'éclairage selon l'une des revendications 1 à 5, **caractérisé en ce que** le premier agencement laser comprend au moins un laser bleu/ultraviolet.

7. Module d'éclairage selon l'une des revendications 1 à 6, **caractérisé en ce que** le deuxième ensemble laser comprend au moins un laser infrarouge.

8. Module d'éclairage selon l'une des revendications 1 à 7, **caractérisé en ce que** le revêtement réfléchissant du micro-miroir (6) est choisi dans le groupe des métaux or, aluminium, argent.

9. Module d'éclairage selon l'une des revendications 1 à 8, **caractérisé en ce que** le micro-miroir (6) oscille à fréquence fixe autour d'un axe, les rayons des sources de lumière laser du premier ensemble laser (LS) étant déviés par le micro-miroir pour former au moins deux bandes de lumière (f1, f2, f3, f4) adjacentes au niveau du moyen de conversion de lumière (7).

10. Module d'éclairage selon la revendication 9, **caractérisé en ce que** la distance entre les bandes lumineuses (f1, f2, f3, f4) est déterminée par l'angle mutuel des faisceaux formés des sources lumineuses laser du premier ensemble laser (LS), la longueur des bandes lumineuses sur le moyen de conversion de lumière (7) est déterminée par l'amplitude d'oscillation du micromiroir (6) et la largeur des bandes lumineuses est déterminée par la section transversale du faisceau.

11. Module d'éclairage selon l'une des revendications 1 à 10, **caractérisé en ce que**, pour ajuster les trajets de faisceau du système d'éclairage et du système LIDAR, les sources de lumière laser (L1, L2, L3, L4 ; H1, H2, H3) d'au moins un ensemble laser (LS, VL) et/ou les miroirs (4, S1 - S4, 18, U1 - U3) situés dans les trajets de faisceau sont réglables.

12. Module d'éclairage selon l'une des revendications 1 à 11, **caractérisé en ce que** des éléments optiques diffractifs, par exemple des réseaux de diffraction, sont utilisés pour les optiques (14, 17, 19, 21) du système LIDAR.

13. Module d'éclairage selon l'une des revendications 1 à 12, **caractérisé en ce que** les optiques (o1 - o4, 3, 5) dans le trajet laser du système d'éclairage sont réalisées sous forme d'éléments optiques diffractifs.
